# EUROPEAN PATENT APPLICATION

(11) **EP 4 752 481 A1**
(43) Date of publication of application: **03.06.2026**
(21) Application number: 24849575.6
(22) Date of filing: 30.07.2024
(51) Int. Cl.: F25D 23/06, F16L 59/065

(54) **HEAT INSULATOR**

(30) Priority: 31.07.2023 KR 20230100017
(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); KIM, Bongjin, Seoul 08592 (KR)
(74) Representative: Ter Meer Steinmeister & Partner
(86) International application number: PCT/KR2024/011151
(87) International publication number: WO 2025/029008

(57) **Abstract**

The present disclosure provides a heat insulator including a first plate, a second plate, a vacuum space portion provided between the first plate and the second plate, and an exterior casing provided to cover one surface of the second plate, in which the exterior casing has a portion that is at least partially bent to be connected to one side of the second plate.

## Description

### [Technical Field]

The present disclosure relates to a heat insulator.

### [Background Art]

First, there is Korean Patent No. 10-0343719 (Patent Document 1) of the present applicant. According to the Patent, a vacuum adiabatic panel is manufactured, the vacuum adiabatic panel is embedded in the wall of a refrigerator, and the exterior of the vacuum adiabatic panel is finished with a separate molded Styrofoam material. This method eliminates the need for foaming and improves insulation performance. However, this method has the drawback of increasing costs and complicating the manufacturing process.

As another example, there have been attempts to fabricate the entire refrigerator wall as a single vacuum heat insulator. For example, U.S. Patent Publication No. US2040226956A1 (Patent Document 2) discloses a method for providing an insulating structure for a refrigerator in a vacuum state. However, it is difficult to provide a sufficient vacuum in the walls of a refrigerator to achieve a practical level of insulation. Specifically, there are several problems, including the difficulty in preventing heat transfer at the connecting portion between the outer and inner cases, which have different temperatures, the difficulty in maintaining a stable vacuum state, and the difficulty in preventing deformation of the case due to negative vacuum pressure.

Japanese Patent Application Laid-Open No. 2011-247534 (Patent Document 3) discloses an insulation box that simplifies the bonding work and improves productivity when installing and preparing multiple vacuum adiabatic panels.

Patent Document 3 discloses an insulation box of a refrigerator including an inner case and an outer case and a plurality of vacuum adiabatic panels provided between the inner and outer cases, and forming a plurality of wall portions of a refrigerator main body, wherein the inner case is formed by combining a plurality of inner case partitions into which the entire inner case is divided, and a plurality of vacuum adiabatic panels are formed in a shape corresponding to each inner case segment, and each of the vacuum adiabatic panels and each of the inner case partitions is installed in the insulation box.

Conventional heat insulators have a problem in that the external surface becomes uneven due to the vacuum pressure applied to the vacuum space portion (so-called "waviness"). This may cause deformation of the heat insulator, and the deformation of the heat insulator may lead to assembly failure when each heat insulator is assembled together. When the "waviness" is exposed to the exterior, there is a problem in that it is not aesthetically pleasing.

When a heat insulator is installed near the assembly of a refrigerator, heat diffusion is not properly performed, causing problems such as a rise in surface temperature on the side surface of the refrigerator and the formation of condensation, requiring the development of the structure for the heat insulator capable of diffusing heat.

### [Prior Art Documents]

### [Patent Documents]

Korean Patent No. 10-0343719
U.S. Patent Publication No. US20040226956A1
Japanese Patent Application Laid-Open No. 2011-247534A

### [Disclosure]

### [Technical Problem]

The present disclosure provides a technology for a heat insulator.

Optionally or additionally, the heat insulator of the present disclosure provides a technology of a structure advantageous for heat diffusion generated in a machine room or the like.

Optionally or additionally, the present disclosure provides a technology capable of alleviating the problem of poor assembly of the heat insulator caused by the problem of the surface becoming uneven due to vacuum pressure.

Optionally or additionally, the present disclosure provides a technology for minimizing deformation due to vacuum pressure.

Optionally or additionally, the present disclosure provides a technology for preventing waviness on the surface of the heat insulator from being externally exposed.

Optionally or additionally, the present disclosure provides a technology for providing strength reinforcement near an edge.

### [Technical Solution]

A heat insulator of the present disclosure may include a first plate and a second plate. The heat insulator may include a vacuum space portion provided between the first plate and the second plate. The heat insulator may include a casing (for example, an exterior casing) provided to cover one surface of the second plate. The casing may include a portion that is at least partially bent to be connected to one side of the second plate.

One surface of the second plate may have a convex portion that is deformed by vacuum pressure forming the vacuum space portion and is formed to convex toward the casing. One surface or an inner surface of the casing may include a connecting portion connected to the convex portion, and/or a spaced-apart portion provided on one surface of the second plate and spaced apart from a peripheral portion of the convex portion. The spaced-apart portion, between one surface of the second plate and one surface of the casing, may be filled with air. For example, the spaced-apart portion, between an outer surface of the second plate and an inner surface of the casing, may be filled with air.

The casing may include a bent portion that extends to be bent on at least one side.

The bent portion may include at least one of a first bent portion, a second bent portion, and a third bent portion. The first bent portion may be bent and extended from one side of the casing. The second bent portion may be bent and extended from the other side of the casing opposite the one side. The third bent portion may be provided between the first bent portion and the second bent portion and bent and extended from the casing.

The second bent portion may have a portion that extends longer than the first bent portion.

The casing may include an extension portion extending parallel to the extension direction of the second plate from one side of the second plate.

A surface component may be provided on one side of the insulation. The casing may have a portion in contact with the surface component.

The casing may have at least one bent portion that extends to be bent on at least one side and is supported by the second plate member. The bent portion may be in contact with the surface component.

The casing may be formed of a material having a higher ionization tendency than that of the second plate.

The second plate may include a first part formed as a surface defining the vacuum space portion. The second plate may include a second portion extending in a direction intersecting at least one side of the first part. A corner between the first part and the second part may be formed as a curved surface having a predetermined R value.

The second part may include a notching portion formed so that a portion thereof is cut out.

The second part may include a through hole in which a coupling member is installed to enable coupling of adjacent panels.

The casing may include a bent portion extending to be bent on at least one side. The bent portion may cover the coupling member.

The second plate may include a bent portion. The second plate may include a notching portion. The notching portion may be provided at a corner between a bent portion provided on one side and a bent portion provided on the other side adjacent to the one side. At least a portion of the notching portion may be formed by being cut out.

### [Advantageous Effects]

The heat insulator of the present disclosure can provide a structure advantageous for heat diffusion generated in a machine room or the like.

The heat insulator of the present disclosure can alleviate an assembly defect of the heat insulator caused by a problem in which a surface thereof becomes uneven due to vacuum pressure.

The heat insulator of the present disclosure can minimize deformation caused by vacuum pressure.

The heat insulator of the present disclosure can prevent waviness on the surface of the heat insulator from being externally exposed.

The heat insulator of the present disclosure can enhance strength reinforcement near an edge.

### [Description of Drawings]

FIG. 1 is a perspective view illustrating an exterior of a refrigerator according to one embodiment of the present disclosure.
FIG. 2 is a conceptual diagram illustrating a heat insulator provided in the refrigerator of FIG. 1.
FIG. 3 is a conceptual diagram illustrating a third plate provided on a plate of FIG. 2.
FIG. 4 is a conceptual diagram illustrating a thermal insulator provided on the plate of FIG. 3.
FIG. 5 is a cross-sectional view illustrating a portion of an example of a main body formed by a plurality of heat insulators.
FIG. 6 is an enlarged cross-sectional view of portion A of FIG. 5.
FIG. 7 is a perspective view illustrating a refrigerator including the main body formed by the heat insulator according to the present disclosure.
FIG. 8 is a conceptual diagram of FIG. 7 viewed toward an interior space.
FIG. 9 is an enlarged view of portion B of FIG. 8.
FIG. 10 is an enlarged view of portion C of FIG. 9.
FIG. 11 is a cross-sectional view illustrating another portion of an example of the main body formed by the plurality of heat insulators.
FIG. 12 is an enlarged cross-sectional view of one side of FIG. 11.
FIG. 13 is a perspective view illustrating an example of a portion of the second plate.
FIG. 14 is a perspective view illustrating another example of a portion of the second plate.

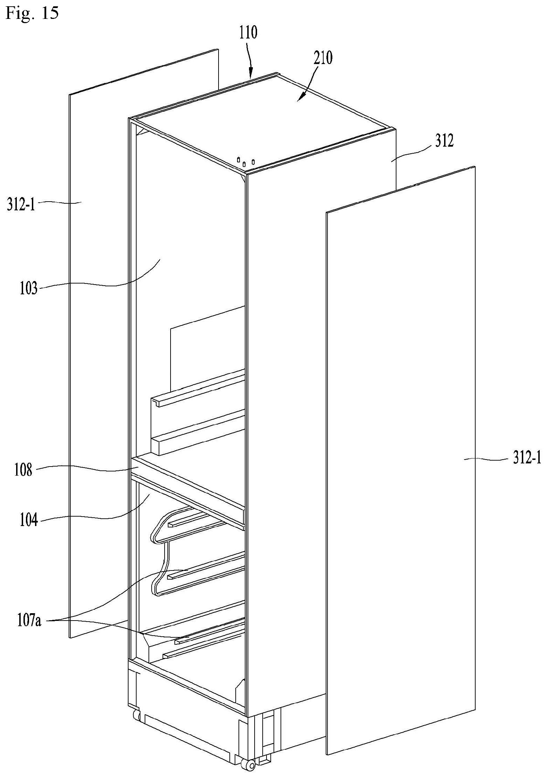

FIG. 15 is a perspective view illustrating a disassembled casing with the door removed.
FIG. 16 is a perspective view illustrating the assembled casing of FIG. 15.
FIG. 17 is an enlarged perspective view of portion D (one side in the +y direction) of FIG. 16.
FIG. 18 is an enlarged perspective view of portion E (one side in the -y direction) of FIG. 16.

### [Mode for Invention]

From now on, a common description describing the parts commonly defined in all embodiments of the present disclosure will be described.

Optionally, the heat insulator of the present disclosure may be provided as a single heat insulator. For example, the heat insulator may provide a first wall extending in one direction and a second wall extending in a direction different from the one direction. Optionally, the heat insulator of the present disclosure may include a first heat insulator and a second heat insulator. The second heat insulator may be provided as a separate component separated from the first heat insulator. The second heat insulator may be connected to the first heat insulator by a connecting member. In the present disclosure, the connecting member may be defined as a joint. The second heat insulator may include a portion extending in the same direction as the first heat insulator. The second heat insulator may include a portion extending in a different direction from the first heat insulator. The second heat insulator may include a portion connected to the first heat insulator, or may include a portion arranged to overlap the first heat insulator in at least one direction. The heat insulator may be a vacuum heat insulator including a vacuum space portion or a non-vacuum heat insulator not including a vacuum space portion. The heat insulator may be a combination of the vacuum heat insulator and the non-vacuum heat insulator. The vacuum space portion provided in the second heat insulator may include a portion extending in the same direction as the vacuum space portion provided in the first heat insulator. The vacuum space portion provided in the second heat insulator may include a portion extending in a different direction from the vacuum space portion provided in the first heat insulator. The vacuum space portion provided in the second heat insulator may include a portion arranged to overlap the vacuum space portion provided in the first heat insulator in at least one direction. The heat insulator may be provided in the form of a panel. In the present disclosure, a "panel" is described below as an example, but a disclosure in which the "panel" is replaced with the "heat insulator" may also be included in the present disclosure. For example, in the present disclosure, when it is described below that at least two panels of the main body form the exterior of the refrigerator, it may be understood or interpreted that at least two heat insulators of the main body form the exterior of the refrigerator.

Optionally, the refrigerator of the present disclosure may include a main body. The main body may include at least one storage chamber. The main body may include a partition wall dividing a first storage chamber and a second storage chamber. The first storage chamber joint may include a first first storage chamber joint, a second first storage chamber joint, and/or a third first storage chamber joint. The second storage chamber joint may be provided on one side of the second storage chamber. The second storage chamber joint may include a first joint, a second joint, and/or a third joint.\

The partition wall may include the vacuum heat insulator and/or the non-vacuum heat insulator. The refrigerator of the present disclosure may include a door. The refrigerator of the present disclosure may include a machine room disposed on one side of the main body. At least one of a compressor, a heat-radiating component (for example, a condenser, a heat-radiating portion of a thermoelectric module, a heat sink for heat exchange with the heat-radiating portion of a thermoelectric module, or the like), and a cooling fan may be disposed in the machine room. The refrigerator may include at least one of a first cover (for example, a side cover) forming at least a portion of a first surface (for example, a side surface), a second cover (for example, a back cover) forming at least a portion of a second surface (for example, a rear surface), a third cover (for example, an upper cover) forming at least a portion of a third surface (for example, an upper surface), a fourth cover (for example, a bottom cover) forming at least a portion of a fourth surface (for example, a bottom surface), and a fifth cover (for example, a front cover) forming at least a portion of a fifth surface (for example, a front surface) for the machine room. One or more of the first, second, third, fourth, and fifth covers may be provided as a single component or in a plurality of components. The machine room may include the heat insulator in the refrigerator of the present disclosure.

The panel may include at least one of a first plate, a second plate, and a side plate. A vacuum space portion may be provided between the first plate and the second plate. The refrigerator of the present disclosure may include at least one panel. The present disclosure may include at least one of a first panel forming at least a portion of a first surface (for example, a side surface) of the refrigerator, a second panel forming at least a portion of a second surface (for example, a rear surface) of the refrigerator, a third panel forming at least a portion of a third surface (for example, an upper surface) of the refrigerator, a fourth panel forming at least a portion of a fourth surface (for example, a bottom surface) of the refrigerator, and a fifth panel forming at least a portion of a fifth surface (for example, a front surface) of the refrigerator. At least one of the first, second, third, fourth, and fifth surfaces of the refrigerator may provide at least a portion of a wall forming the main body or may provide at least a portion of a wall forming the door. At least one of the first, second, third, fourth, and fifth panels may be provided as a single component or may be provided in a plurality of components. The joint may be provided to connect the corner of the refrigerator or to connect a first wall and a second wall forming a wall of the refrigerator to each other. The joint may be provided to connect the panel to another component (for example, another panel). The joint may be provided to connect at least two of the first, second, third, fourth, and fifth panels. At least one of the first, second, third, fourth, and fifth panels may be provided as a plurality of panels, and the joint may be provided to connect the plurality of panels to each other. The joint may include a first surface, a second surface, and/or a third surface. The first surface of the joint may cover at least a portion of at least one of the first, second, third, fourth, and fifth panels. The second surface of the joint may cover at least a portion of at least another one of the first, second, third, fourth, and fifth panels. The third surface of the joint may be connected to the first surface of the joint and/or the second surface of the joint. The third surface of the joint may be connected to a corner of the first surface of the joint and/or a corner of the second surface of the joint. The third surface of the joint may be formed to be inclined to at least one of the first surface of the joint and the second surface of the joint. At least some of the first, second, third, fourth, and fifth panels may be provided as panels having a first insulation performance per unit thickness, and at least other some of the first, second, third, fourth, and fifth panels may be provided as panels having a second insulation performance per unit thickness. The first insulation performance and the second insulation performance may be different.

The heat insulator or refrigerator of the present disclosure may include a duct. The duct may include a first duct, a second duct, and/or a third duct. The first duct may supply cold air to the first storage chamber or the second storage chamber. The second duct may accommodate an evaporator. The third duct may be connected to the first duct and the second duct in communication with each other. The third duct may include a first surface, a second surface, a third surface, a fourth surface, and/or a fifth surface. The first surface of the third duct may surround the first surface of the joint. The second surface of the third duct may surround the second surface of the joint. The third surface of the third duct may surround the third surface of the joint. The third duct may include a fourth surface. The fourth surface of the third duct may extend from the first surface of the third duct or may be arranged toward the second storage chamber. The fifth surface of the third duct may extend from the second surface of the third duct or may be arranged toward the evaporator.

The heat insulator or refrigerator of the present disclosure may include a block. The block may include a portion extending in the same direction as one or more of the first, second, third, fourth, and fifth panels. The block may include a portion extending in a different direction from one or more of the first, second, third, fourth, and fifth panels. The block may include a first surface (for example, a left surface), a second surface (for example, a right surface), a third surface (for example, a rear surface), a fourth surface (for example, a lower surface), a fifth surface (for example, an upper surface), and a sixth surface (for example, a front surface). Some of the first, second, third, fourth, and fifth surface of the refrigerator may be provided in the form of panels, and other parts of the first, second, third, fourth, and fifth surfaces of the refrigerator may be provided in the form of blocks. The block may be provided as the non-vacuum heat insulator. For example, the block may be a block cover and/or a PU foam filling inside the block cover. The block may include at least one of a first block portion (for example, a side block portion), a second block portion (for example, a rear block portion or a front block portion), and a third block portion (for example, a bottom block portion or an upper block portion). Each of the first, second, and third block portions may be provided in a plurality of block portions. At least two of the first, second, and third block portions may be connected to provide the joint. The third block portion may form one surface of the first storage chamber and/or one surface of the machine room. The third block portion may be provided as a partition wall, or may form one surface of the first storage chamber.

The heat insulator or refrigerator of the present disclosure may include an insulating reinforcement portion. The insulating reinforcement portion may include a portion connected to one side of the block, or a portion formed to protrude from the block.

The heat insulator or refrigerator of the present disclosure may include a hinge. The hinge may be arranged on one side of the heat insulator. The hinge may be arranged on the main body and/or door of the refrigerator.

The hinge may include at least one of a hinge fixing portion which is a portion that the hinge is coupled to at least one of the heat insulator, the main body of the refrigerator, and the door of the refrigerator, a hinge shaft, and a hinge connecting portion which is a portion extending to protrude from the hinge fixing portion. The hinge may include at least one of a first hinge (for example, an upper hinge) arranged on one side of a wall forming the first storage chamber, a second hinge (for example, a middle hinge) arranged on the partition wall, and a third hinge (for example, a lower hinge) of the wall forming the second storage chamber. The heat insulator or the refrigerator of the present disclosure may include at least one of a hinge reinforcing frame that reinforces the strength of the hinge, a cover to which the hinge is coupled, and a hinge reinforcing plate that is arranged or accommodated so as to be connected to the panel. The hinge reinforcing frame may include at least one of a first, a second, a third, and a fourth frame portion. At least two of the first, second, third, and fourth frame portions may extend in different directions.

The heat insulator or refrigerator of the present disclosure may include a support frame. The support frame may support one surface of the panel. The support frame may include a coupling portion. The block may be supported by the support frame in the machine room. The support frame may include a first support frame and/or a second support frame.

The heat insulator or refrigerator of the present disclosure may include an inner cover. The inner cover may be arranged between the cover of the machine room and the hinge reinforcement frame (for example, the first frame portion).

The heat insulator or refrigerator of the present disclosure may include a decoration. The decoration may be arranged on the surface of the heat insulator. The decoration may be arranged on the surface of the main body and/or door of the refrigerator. For example, the decoration may be arranged on the outer surface of the heat insulator or the outer surface of the refrigerator.

The heat insulator or refrigerator of the present disclosure may include a hot line. The hot line may be arranged on the surface of the heat insulator. The decoration may be arranged on the surface of the main body and/or door of the refrigerator. The hot line may be arranged between the decoration and the surface of the heat insulator. The hot line may be arranged between the decoration and the surface of the refrigerator and/or between the decoration and the surface of the door.

The heat insulator or refrigerator of the present disclosure may include a casing. The casing may be an outer casing or an inner casing. The outer casing may be connected to the second plate. The outer casing may be provided to cover at least a portion of the second plate. The outer casing may be provided in contact with the second plate or spaced apart from the second plate by a predetermined distance. The inner casing may be connected to the first plate. The inner casing may be provided to cover at least a portion of the first plate. The inner casing may be provided in contact with the first plate or spaced apart from the first plate by a predetermined distance.

The heat insulator or refrigerator of the present disclosure may include a drawer and/or a drawer guide. The drawer guide may include a first storage chamber drawer guide provided in a first storage chamber. The first storage chamber drawer guide may include at least one of a first plate (for example, a side plate), a second plate (for example, a bottom plate), a third plate (for example, a top plate), and a fourth plate (for example, a middle plate).

The drawer guide may be provided with a second storage chamber drawer guide provided in the second storage chamber.

The heat insulator or refrigerator of the present disclosure may include a shelf and/or a shelf support frame.

[Details Description of the Disclosure] is divided into the aforementioned [common description] and the [description based on drawings] described below. In the [Details Description of the Disclosure], each of the specific details described for carrying out the disclosure may be understood as an embodiment of the present disclosure. In the [Details Description of the Disclosure], a content that combines at least two or more of the specific details described for carrying out the disclosure may also be understood as an embodiment of the present disclosure. For example, each paragraph and each combination of paragraphs in the [common description] section or the section described based on the drawings in the [Details Description of the Disclosure] may be understood as an embodiment of the present disclosure. As another example, each sentence and each combination of sentences in the [Common description] section or the section described based on the drawings in the [Details Description of the Disclosure] may be understood as an embodiment of the present disclosure.

From now on, based on each drawing, the [description based on drawing] section describing the present disclosure will be described.

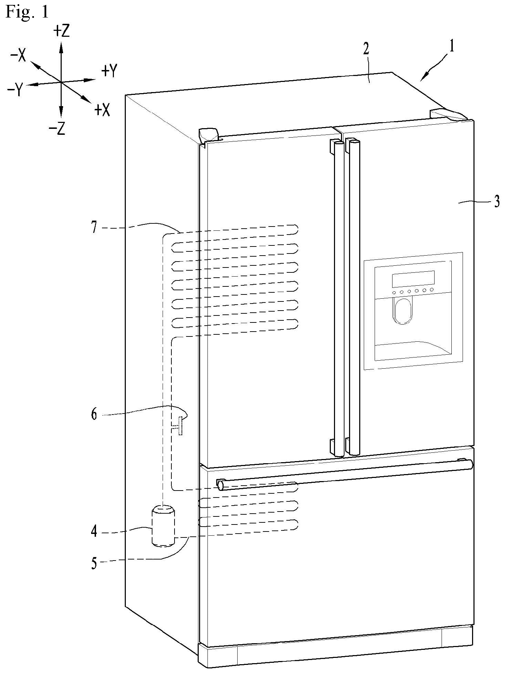

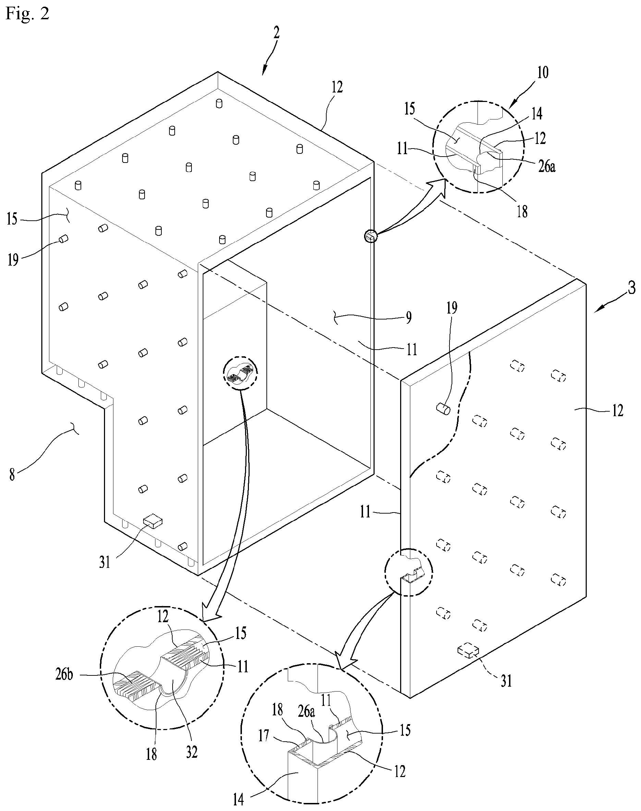

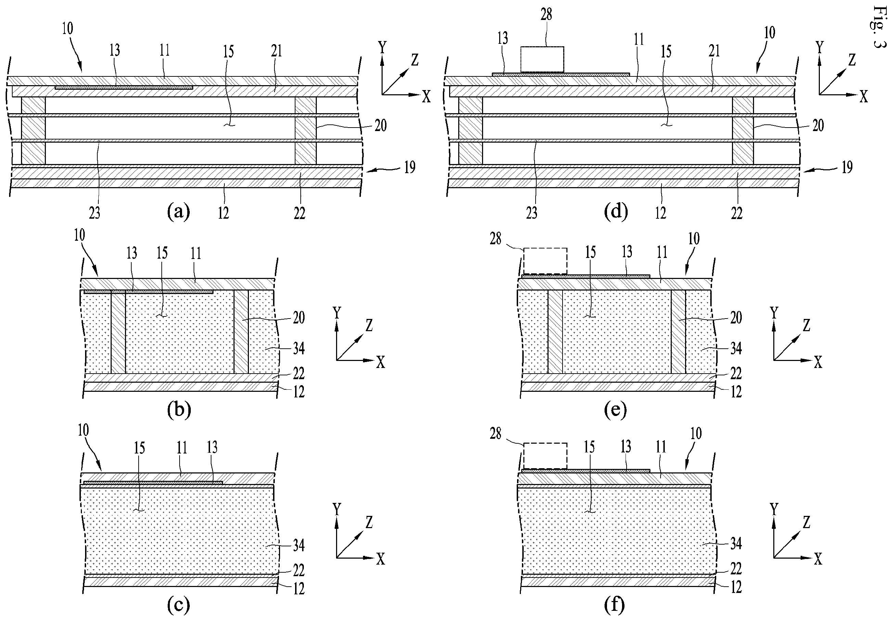

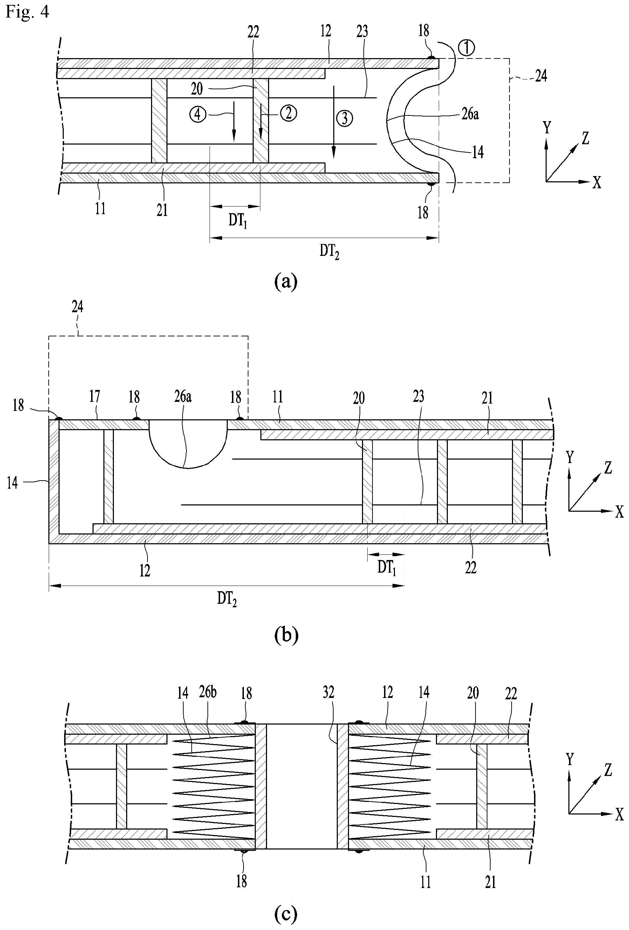

Referring to FIGS. 1 to 4, a heat insulator 10 of the present disclosure may include plates 11, 12, and 14. In the present disclosure, the term "plate" may mean at least one of the first and second plates 11 and 12 and the side plate 14. Optionally, the heat insulator of the present disclosure may include a vacuum space portion 15. The vacuum space portion 15 may be formed by walls provided by the plates 11, 12, and 14. The vacuum space portion 15 may have a thickness in a first direction. The plates 11, 12, and 14 may include a first plate 11 and a second plate 12. The first plate 11 may include a portion extending in a direction different from the first direction. The second plate 12 may include a portion extending in a first direction different from the first direction. Optionally, the plate may include a side plate 14 including a portion extending in the first direction. For example, the heat insulator 10 of the present disclosure may be provided such that the first and second plates 11 and 12 and the side plate 14 are each provided as separate components, and the separated components are connected to each other. As another example, the heat insulator 10 of the present disclosure may be provided such that at least two components among the first and second plates 11 and 12 and the side plate 14 are provided as an integral part, and the separated components are connected to each other. As yet another example, the heat insulator 10 of the present disclosure may be provided such that the portions connecting the first and second plates 11 and 12 and the side plate 14 to each other are each provided as an integral part. In this case, the first plate 11 may be provided as a separate component, and the separated components may be provided to be connected to each other. Alternatively, the second plates 12 may be provided as separate components, and the separated components may be provided to be connected to each other. Alternatively, the side plates 14 may be provided as separate components, and the separated components may be provided to be connected to each other. Optionally, the heat insulator 10 of the present disclosure may include a third plate that is arranged on at least a portion of the heat insulator 10 or connected to at least a portion of the plates 11, 12, and 14. The third plate may include a portion that is thinner or has the same thickness as the plates 11, 12, and 14. The third plate may include a portion that is thicker than the plates 11, 12, and 14. The third plate may be arranged in the vacuum space portion 15 or may be arranged outside the vacuum space portion 15. Examples of the third plate may include the thermal insulators 23, 26a, 26b, and 34 and the deformation resistor 13 described in the present disclosure.

Optionally, the heat insulator 10 of the present disclosure may include thermal insulators 23, 26a, 26b, and 34 for reducing the amount of heat transfer between a first space provided near the first plate 11 and a second space provided near the second plate 12, or for reducing the amount of heat transfer between the first plate 11 and the second plate 12. A thermal insulator that reduces the amount of heat transfer by conduction may be defined as a conduction resistance sheets 26a and 26b, and a thermal insulator that reduces the amount of heat transfer by radiation may be defined as a radiation resistance sheet 23. The thermal insulators 23, 26a, 26b, and 34 may be provided as a porous material 34 or as a filler 34. The filler whose interior is filled with a porous material can be defined as the porous material 34. The thermal insulators 23, 26a, 26b, and 34 may include at least one of the radiation resistance sheet 23, the porous material 34, the filler 34, and the conduction resistance sheets 26a and 26b, or a mixture of at least two of them. The thermal insulators 23, 26a, 26b, and 34 may be connected to at least a portion of the plates 11, 12, and 14 or may be provided so as not to come into contact with the plates 11, 12, and 14. A shield 24 may be provided on the outside of the thermal insulators 23, 26a, 26b, and 34 to provide insulation. A connecting frame 17 may be provided on the outside of the thermal insulators 23, 26a, 26b, and 34. The heat insulator 10 may include a conduit passing through the vacuum space portion 15. The conduit may be formed by providing a pipe wall 32 as a separate component, or may be provided in a form in which the pipe wall 32 is deleted and only a through hole is formed in the plate. The side plate 14 may be provided near the conduit, or the thermal insulators 23, 26a, 26b, and 34 may be provided.

Optionally, the heat insulator 10 of the present disclosure may include a deformation resistor 13 connected to at least some of the plates 11, 12, and 14 to increase the degree to deformation resistance of the plates 11, 12, and 14. When the deformation resistor is provided in the form of a plate, the deformation resistor may be referred to as a deformation resistance plate.

Optionally, the heat insulator 10 of the present disclosure may include a support 19 connected to at least some of the plates 11, 12, and 13 and maintaining the vacuum space portion 15. The support 19 may include a bar 20 having a portion extending in a first direction, which is a thickness direction of the vacuum space portion 15. The support 19 may include a support plate 22 having a portion extending in a direction different from the first direction. The support 19 may include a plurality of bars 20 and a connecting plate 21 connecting the plurality of bars 20. The support 19 may include at least one of the bar 20, the connecting plate 21, and the support plate 22, or a mixture of at least two of them.

Optionally, the heat insulator 10 of the present disclosure may include a component coupling portion that provides a portion where the components 24, 28, and 32 are arranged or supported. For example, when the component coupling portion is provided in the form of a plate, the component coupling portion may be referred to as a component coupling portion plate. The component connected to the component coupling portion may include a through component that is arranged to pass through at least a portion of the heat insulator 10 or at least some of the plates 11, 12, and 14. The component connected to the component coupling portion may include a surface component that is arranged to be connected to the surface of the heat insulator 10 or to be connected to the surfaces of the plates 11, 12, and 14. The through component may be a component that forms a path through which a fluid (electricity, refrigerant, water, air, or the like) passes. The through component may be provided in the form of a tube. The tube may include a straight tube and/or a curved tube. The tube may be provided in a plurality of tubes or may extend in one direction. The through component may include at least one of the tube, the first outlet portion, and the second outlet portion. In the present disclosure, the fluid is defined as all types of flowing objects. The fluid includes moving solids, liquids, gases, and electricity. The through component may be a component that forms a path through which a refrigerant for heat exchange passes, such as a Suction Line Heat Exchanger (SLHX) or a refrigerant pipe. The SLHX may be understood as a suction line heat exchanger that causes heat exchange between the refrigerant that has passed through the evaporator and the refrigerant before being introduced into the evaporator. The through component may be a wire that supplies electricity to the apparatus. The through component may be a component that forms a path through which air can pass, such as a duct or port through which a fluid flows along the surface of the through component. The port may include an exhaust port that provides a path through which air is exhausted from a space formed between the first plate 11 and the second plate 12 to form the vacuum space portion 15. The through component may be paths through which fluids such as coolant, hot water, ice, and defrost water may pass. Examples of the surface component may include a peripheral insulating material, a side panel, an injected foam, a pre-prepared resin, a hinge, a latch, a basket, a drawer, a shelve, lighting, a sensor, an evaporator 7, a front decoration, a hot line, a heater, an exterior cover, and an interior cover.

Through FIGS. 1 to 4, terms such as the plate, the first plate, the second plate, the side plate, the third plate, the vacuum space portion, the thermal insulator, the conduction resistance sheet, the radiation resistance sheet, the porous material, the filler, the component coupling portion, the joint, the support, the bar, the support plate, the connecting plate, the deformation resistor, the deformation resistance plate, the component coupling portion, the component coupling portion plate, the through component, the surface component, the duct, the port, or the like are defined. In the present disclosure, when the above terms are used in parts other than the parts described with respect to FIGS. 1 to 4, the terms used should be interpreted as defined in FIGS. 1 to 4.

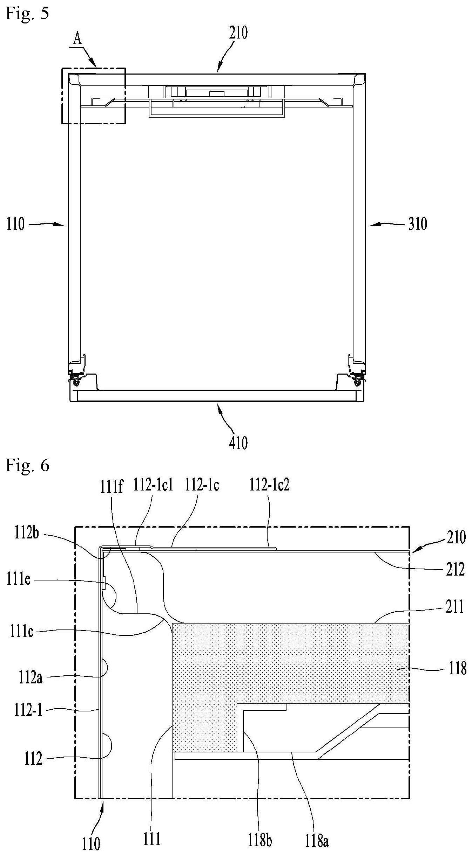

In the present disclosure, that object A is connected to object B may be defined to mean that at least a portion of the object A and at least a portion of the object B are directly connected, or that at least a portion of the object A and at least a portion of the object B are connected via an intermedium between the objects A and B. In a modification example, the object A being connected to the object B may include a case in which the object A and the object B are prepared as a single body in a shape in which they are connected in the above-described manner. In the present disclosure, examples of connection can be support, combine, and seal, which will be described later. In the present disclosure, the phrase "object A is supported by the object B" may be defined to mean that the object A is restricted from moving in one or more of +X, -X, +Y, -Y, +Z, and -Z axis directions by the object B. In the present disclosure, examples of support may be coupling and sealing, which will be described later. In the present disclosure, the phrase "object A is combined with the object B" may be defined to mean that the object A is restricted from moving in one or more of the X, Y, and Z-axis directions by the object B. In the present disclosure, an embodiment of the combination may be a sealing, which will be described later. In the present disclosure, the phrase "object A is sealed with the object B" may be defined to mean that movement of fluid is not permitted at a portion where the object A and object B are connected. In the present disclosure, at least one object, that is, at least a portion of the object A and the object B, may be defined as including a portion of the object A, the entirety of the object A, a portion of the object B, the entirety of the object B, a portion of the object A and a portion of the object B, a portion of the object A and the entirety of the object B, the entirety of the object A and a portion of the object B, and the entirety of the object A and the entirety of the object B. In the present disclosure, the phrase "plate A may be a wall defining space A" may be defined to mean that at least a portion of the plate A may be a wall forming at least a portion of the space A. That is, at least a portion of the plate A may be the wall forming the space A, or the plate A may be the wall forming at least a portion of the space A. In the present disclosure, the central portion of an object may be defined as a portion positioned at the center among three portions obtained by dividing the object into three equal parts along a longitudinal direction of the object. The periphery of an object may be defined as a portion positioned on one side or the other of a central portion among three portions obtained by dividing the object into three equal parts. The periphery of an object may include a surface in contact with the central portion and a surface opposite thereto. The opposite surface may be defined as the border or edge of the object. In the present disclosure, a degree to deformation resistance indicates the degree to which an object resists deformation, and may be defined as a value determined by the shape including the thickness of the object, the material of the object, and the processing method of the object. In the present disclosure, a degree of heat transfer resistance indicates the degree to which an object resists heat transfer, and may be defined as a value determined by the shape including the thickness of the object, the material of the object, and the processing method of the object. In the present disclosure, a degree of heat transfer resistance may be defined as at least one of a degree of conduction resistance, a degree of radiation resistance, and the degree of convection resistance or a sum of at least two or more thereof. The terms "upper side", "lower side", "right side", "left side", "front side", and "rear side" used in the following description will be understood through the coordinate system illustrated in FIGS. 1 and 5. An example of the "+Z" means the "upper side", an example of the "-Z" means the "lower side", an example of the "+Y" means the "right side", an example of the "-Y" means the "left side", an example of the "+X" means the "front side", and an example of the "-X" means the "rear side". A front-rear direction used in the present specification may be an example of the X-axis direction, a left-right direction may be an example of the Y-axis direction, and an up-down direction may be an example of the Z-axis direction.

The heat insulator 10 of the present disclosure may be applied to a refrigerator 1. The refrigerator 1 may include a main body 2 provided with a cavity 9 capable of storing stored items, and a door 3 provided to open and close the main body 2. A cold source for supplying cold air (cold) to the cavity 9 may be provided. For example, the cold source may be an evaporator 7 that evaporates a refrigerant to remove heat. The refrigerator may include a compressor 4 that compresses the refrigerant. The refrigerator may include a condenser 5 that condenses the compressed refrigerant. The condenser 5 may be connected to an expander 6 that expands the condensed refrigerant.

In the present disclosure, casings 112-1 and 312-1 are provided to cover one surface or the outer surface of second plates 112 and 312. The casings 112-1 and 312-1 may include a portion that is at least partially bent and connected to one side of the second plate. For example, the casings 112-1 and 312-1 may include a portion that is at least partially bent and connected to the corners of the second plates 112 and 312.

In the present disclosure, since the second plates 112 and 312 and the casings 112-1 and 312-1 form an external space, the second plates 112 and 312 and the casings 112-1 and 312-1 may be referred to together as an outer casing.

By covering one surface or the outer surface of the second plates 112 and 312 with the casings 112-1 and 312-1, the function as a heat diffusion plate is performed.

The casings 112-1 and 312-1 may be made of a material having a higher ionization tendency than the material of the first and/or second plates 111, 311, 112, and 312 to prevent corrosion. For example, the casings 112-1 and 312-1 may be a galvanized steel plate.

The aesthetic appeal can be improved by preventing a wavy surface that may be formed on one surface or the outer surface of the second plates 112 and 312 by vacuum pressure in vacuum space portions 115 and 315 from being exposed to the outside.

Preferably, heat insulators 110 and 310 on which the casings 112-1 and 312-1 of the present disclosure is installed may be a portion forming at least one surface of the main body of the refrigerator. For example, the heat insulators 110 and 310 on which the casings 112-1 and 312-1 are installed may be two surfaces arranged parallel to each other. However, the present disclosure is not necessarily limited thereto.

Optionally, in the present disclosure, at least two heat insulators 110 and 310 arranged in directions intersecting each other may be provided, and two heat insulators may be connected so that a portion of one side overlaps each other. The two adjacent heat insulators 110 and 310 may be provided so that the respective vacuum space portions 115 and 315 overlap or do not overlap each other in at least one of the thickness direction and the length direction of the vacuum space portions 115 and 315.

Optionally, the casings 112-1 and 312-1 may cover the joint portion where one sides of the heat insulators 110 and 210 overlaps each other. The casings 112-1 and 312-1 may protect the joint portion. The casings 112-1 and 312-1 may prevent the joint portion from being exposed to the outside.

Two adjacent heat insulators 110 and 210 may be arranged so that portions of curved extension portions 111c and 211c face each other.

Referring to FIGS. 5 and 6, two adjacent heat insulators 110 and 210 are arranged on one surface and the other surface intersecting the one surface, respectively. An additional heat insulator 118 is arranged on one side or the inner side of the first plates 111 and 211.

Support brackets 118a and 118b are installed to support the additional insulation 118. One side of the additional insulation 118 and/or the other side intersecting the one side are connected to the first plate 111 of the first insulation 110 and/or the first plate 211 of the second insulation 210. On another side of the additional insulation 118, first support brackets 118a and 118b at least a portion of which is provided to be inclined and/or second support brackets 118a and 118b that are formed to protrude from and/or be bent from the first support brackets 118a and 118b may be provided.

On one side of two adjacent heat insulators 110 and 210, there is a portion where the first and second plates 111, 211, 112, and 212 are coupled to each other, and a portion where the two heat insulators 110 and 210 face each other, which is vulnerable to insulation. As the additional heat insulator 118 is arranged, the insulation performance can be improved on one side or the inner side of the two adjacent heat insulators 110 and 210.

The casings 112-1 and 312-1 may have a bent portion 112-1c that is bent on one side of the heat insulators 110 and 210.

FIG. 6 illustrates an example in which a bent portion 112-1c covers one side of the heat insulators 110 and 210. An example in which the first and second heat insulators 110 and 210 are coupled to each other is illustrated.

With respect to the bent portion 112-1c, referring to FIG. 6, the bent portion may include a bent step portion 112-1c1 and/or an end portion 112-1c2. The bent step portion 112-1c1 may have a higher step than the surrounding area in the bent portion 112-1c of the casings 112-1 and 312-1. As a result, the bent step portion 112-1c1 can accommodate the one side of the second plate 212 while minimizing interference on one side or an inner side thereof. The end portion 112-1c2 may be formed to be folded, thereby reinforcing strength.

The bent portion 112-1c may extend more than 50 mm in FIG. 6. This facilitates heat diffusion through the bent portion 112-1c. Air inflow and outflow may be blocked. This improves the surface temperature of the heat insulators 110 and 210. It is possible to sufficiently shield the portion where at least two heat insulators 110 and 210 are coupled to each other so as not to be exposed to the outside.

The casings 112-1 and 312-1 may have an extension portion 312-1e extending parallel to the extension direction of the second plates 112 and 312 from one side of the second plates 112 and 312.

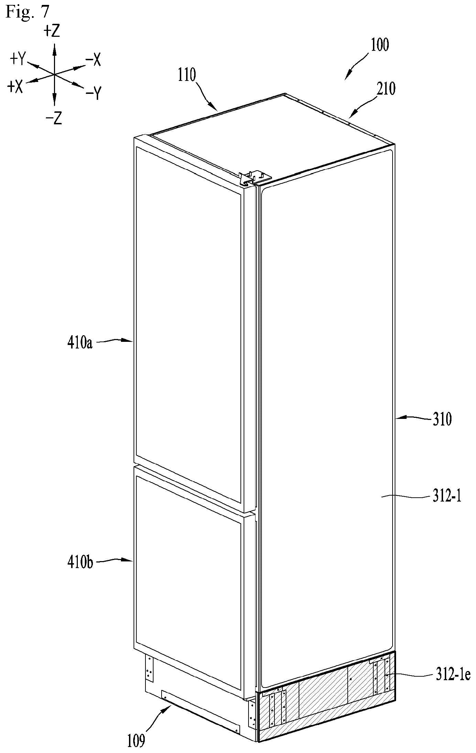

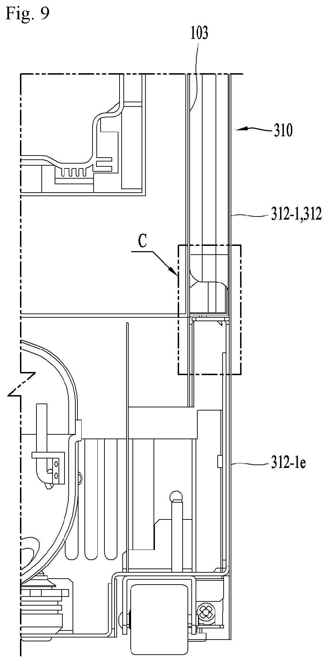

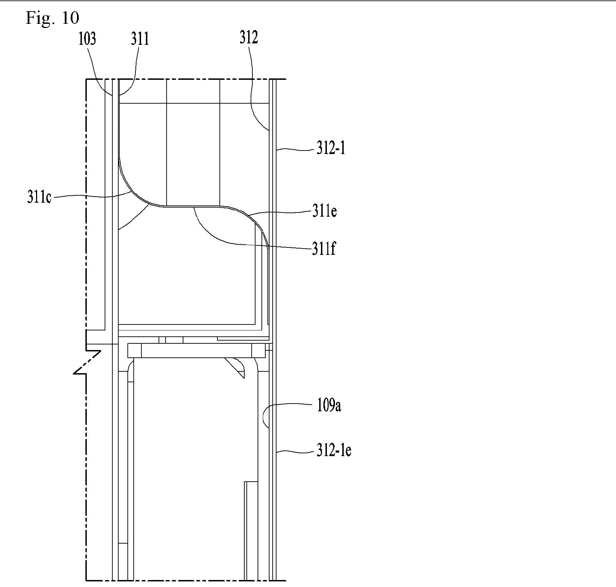

FIGS. 7 to 10 illustrate examples in which the casings 112-1 and 312-1 have the extension portion 312-1e on one side. The extension portion 312-1e may be formed to extend further than one side of the second plates 112 and 312. The extension portion 312-1e may not have a portion that overlaps the second plate 312.

The casings 112-1 and 312-1 may shield other components arranged on one side of the heat insulators 110 and 310 by the extension portion 312-1e and other components arranged further on one side or the inner side of these components.

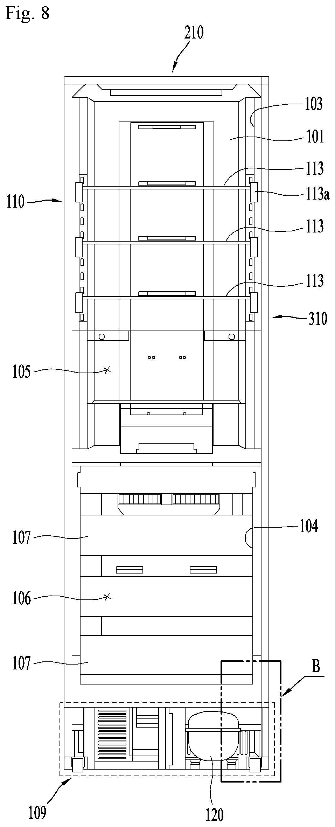

Optionally, a machine room 109 may be provided on one side of the heat insulators 110 and 310. For example, as illustrated in FIGS. 7 and 8, the machine room 109 may be provided on the lower end of one side of the heat insulators 110 and 310.

The extension portion 312-1e may have a portion connected to a machine room cover 109a that defines a space within the machine room 109.

Heat generated in the machine room 109 may be transferred to the extension portion 312-1e of the casings 112-1 and 312-1 and released. As a result, the surface temperature of the heat insulators 110 and 310 can be improved, thereby preventing dew formation.

A component may be provided on one side of the heat insulators 110 and 310, and the casings 112-1 and 312-1 may have a portion connected to the component. The component connected to the casings 112-1 and 312-1 may be, for example, a surface component.

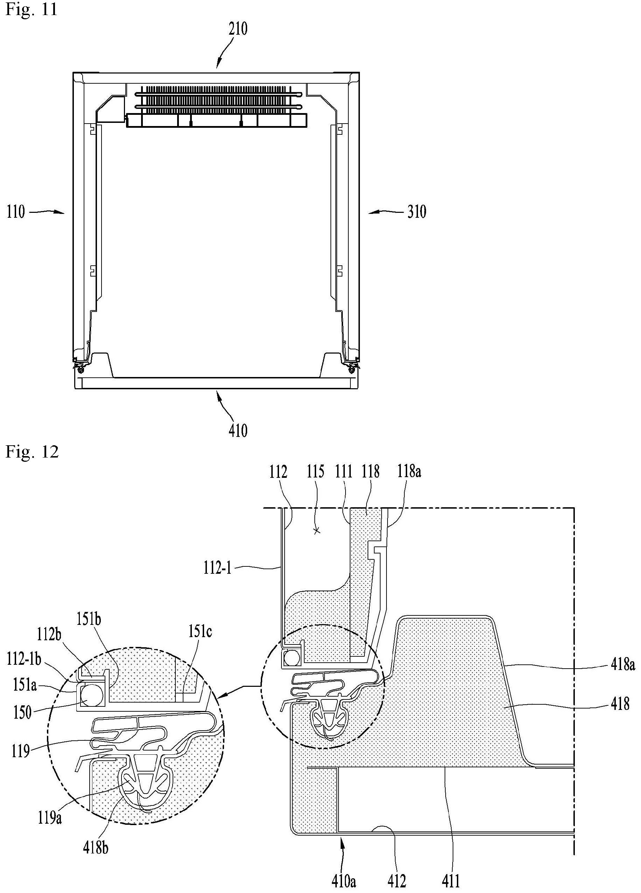

As illustrated in FIG. 12, the casings 112-1 and 312-1 may include at least one bent portion 112-1b that extends to be bent on at least one side and is supported on a second plates 112 and 312 member, and/or the bent portion 112-1b may be connected to the component.

The component includes a hot line 150 and/or brackets 151a, 151b, and 151c for accommodating the hot line 150 to connect the hot line 150 to the heat insulators 110 and 310. The brackets 151a, 151b, and 151c may also be referred to as an accommodating bracket for accommodating the component.

For example, the hot line 150 may be formed in a circular tube shape so that refrigerant flows inside. The hot line 150 may be connected to the condenser, and may receive heat generated from the condenser and dissipate heat. The hot line 150 transfers heat to the connecting surface of a first storage compartment door and/or a second storage compartment door, thereby preventing condensation from occurring due to a temperature difference between the outside and inside of the refrigerator.

As illustrated in FIG. 12, the hot line 150 may be provided on one side of the heat insulators 110 and 310.

The brackets 151a, 151b, and 151c may include a first member 151a that supports connection to the hot line 150 and/or a second member 151b that is coupled to and hooked to the second plates 112 and 312. The brackets 151a, 151b, and 151c may be connected to and supported by an insulating material arranged on one side or the inner side of the first plates 111 and 211 of the heat insulators 110 and 310, and/or may include a third member 151c that is connected to the first member 151a and the second member 151b.

The first member 151a may have a portion formed parallel to the longitudinal direction of the heat insulators 110 and 310 and a portion formed parallel to the thickness direction of the heat insulators 110 and 310.

Referring to FIG. 12, an example is illustrated in which the surface component includes the hot line 150 and the brackets 151a, 151b, and 151c that accommodates the hot line to connect the hot line 150 to the heat insulators 110 and 310. The bent portion 112-1b of the casings 112-1 and 312-1 is connected along one surface of the brackets 151a, 151b, and 151c.

As illustrated in FIG. 12, an example is illustrated in which the bent portion 112-1b is connected to the second member 151b of the brackets 151a, 151b, and 151c at the end portion and/or is connected to the first member 151a at the bent portion.

In this way, the casings 112-1 and 312-1 may function as a heat diffusion plate that diffuses heat generated or transmitted from the surface component as the bent portion 112-1b is connected to the surface component.

Optionally, the bend portion 112-1b may be arranged near the insulating structure. For example, the bend portion 112-1b may be bent so that one side faces the -x direction.

The bent portion 112-1b may be connected to the insulating structure or spaced apart from the insulating structure by a predetermined distance.

It is preferable that the bent portion 112-1b is arranged so as not to interfere with the insulating structure.

This reduces condensation near the insulation structure and allows heat to be diffused through the insulation structure.

As illustrated in FIG. 12, the insulating structure can be exemplified by a gasket 119, which, as described above, may be understood as a separate member placed on the outside of the thermal insulator.

In the present disclosure, the second plates 112 and 312 may have first portions 112a and 312a formed as a surface defining vacuum space portions 115 and 315 and/or second portions 112b and 312b bent at one end of the first portion. The second portions 112b and 312b may be formed through a bending process. The second portions 112b and 312b may also be referred to as a bent portion or a bent part.

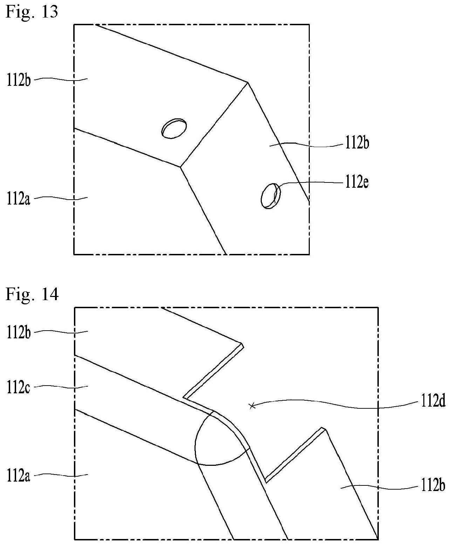

As illustrated in FIG. 14, in the second plate 112, the corner between the second part 112b and 312b 112b and the first part 112a may be a curved surface having a predetermined R value.

Accordingly, the second plates 112 and 312 does not tear during molding.

Optionally, the second portion 112b may include a through hole 112e into which a component is installed to enable coupling of adjacent panels (for example, heat insulators). As a result, at least two heat insulators 110 and 210 in the directions intersecting each other may be coupled to each other by the second plate.

Optionally, as illustrated in FIG. 14, the second portion 112b provided at the corner of the second plate 112 may be provided with a notching portion 112d formed so that a portion thereof is cut off.

The notching portion 112d may be formed by being cut out across the bent portion (second part 112b and 312b) 112b provided on two surfaces. The bent portions of the two surfaces may meet to form a corner. The corner of the bent portion may include a curved portion. Optionally, the notching portion 112d may be formed at the corner of the bent portion.

The second plates 112 and 312 may include the notching portion 112d at the corner between the bent portion (second part 112b and 312b) 112b provided on one side and the bent portion provided on the other side adjacent to the one side.

The end portion of the second part 112b and 312b of the second plates 112 and 312 may additionally include a bent portion. The bent end portion may include a portion connected to the second part 112b and 312b.

In this way, in the present disclosure, the second plates 112 and 312 may form a double-bent structure, so that strength reinforcement can be achieved at the edge portion of the second plates 112 and 312, that is, the assembly portion of the heat insulators that intersect each other.

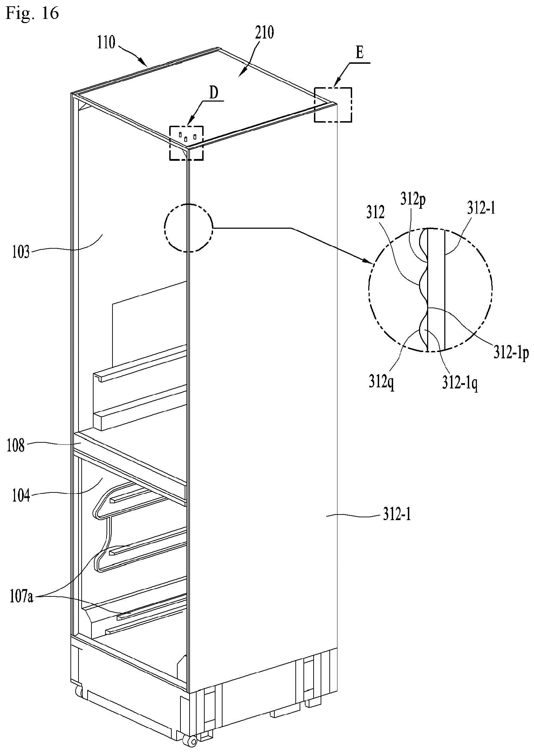

Referring to FIG. 16, one surface or outer surface of the second plates 112 and 312 may be provided with a convex portion 312p that is formed to be convex toward the casings 112-1 and 312-1 by being deformed by vacuum pressure forming the vacuum space portions 115 and 315.

One surface or outer surface of the second plates 112 and 312 may also be provided with a concave portion 312q near the convex portion 312p. One surface or inner surface of the casings 112-1 and 312-1 may include a connecting portion 312-1p and/or a spaced-apart portion 312-1q. The connecting portion 312-1p may be connected to the convex portion 312p. The spaced-apart portion 312-1q may be separated from the peripheral portion of the convex portion 312p on one side or outer surface of the second plates 112 and 312.

In the present disclosure, during the process of forming the vacuum space portions 115 and 315 between the first plates 111 and 211 and the second plates 112 and 312, a so-called "waviness" is formed on one surface or the outer surface of the second plates 112 and 312 due to the vacuum pressure. The "waviness" refers to a shape in which the concave portion 312q and the convex portion 312p are formed, or which has different heights.

Among these, the connecting portion 312-1p may be a portion that is connected to the convex portion 312p, which is a relatively convex portion of the second plates 112 and 312, on one surface or the inner surface of the casings 112-1 and 312-1. The spacing portion 312-1q may be a portion that is spaced apart from the peripheral portion of the convex portion 312p of the second plates 112 and 312 on one surface or the inner surface of the casings 112-1 and 312-1.

Optionally, air may be accommodated between the spaced-apart portion 312-1q of the second plates 112 and 312 and one surface of the casings 112-1 and 312-1. For example, air may be accommodated between the spaced-apart portion 312-1q of the second plates 112 and 312 and the inner surface of the casings 112-1 and 312-1. This enables the formation of an air insulation material between the second plates 112 and 312 and the casings 112-1 and 312-1, and the insulation performance of the heat insulators 110 and 310 may be improved.

Optionally, the casings 112-1 and 312-1 may have at least one of the bent portions 312-1a, 312-1b, and 312-1c. The bent portions 312-1a, 312-1b, and 312-1c may extend to be bent on at least one side of the casings 112-1 and 312-1. The bent portions 312-1a, 312-1b, and 312-1c may be supported by the second plates 112 and 312 member.

The bent portions 312-1a, 312-1b, and 312-1c may be coupled in a form that includes, for example, a portion that is fitted into or hooked onto the second plates 112 and 312 or a portion pressuring the second plates 112 and 312.

Optionally, the bent portions 312-1a, 312-1b, and 312-1c may be bonded or joined to the second plates 112 and 312 by a hot melt method or by applying a metal adhesive.

The bent portion may include at least one of a first bent portion 312-1a, a second bent portion 312-1b, and a third bent portion 312-1c.

The first bent portion 312-1a may be bent and extended from one side of the casings 112-1 and 312-1.

The second bent portion 312-1b may be bent and extended from the other side opposite to one side of the casings 112-1 and 312-1.

The first bent portion 312-1a and the second bent portion 312-1b may be formed in a direction parallel to each other.

The third bent portion 312-1c may be bent and extended from the other side of the casings 112-1 and 312-1 provided between the first bent portion 312-1a and the second bent portion 312-1b.

The third bent portion 312-1c may be formed in a direction intersecting the first bent portion 312-1a. The third bent portion 312-1c may be formed in a direction intersecting the second bent portion 312-1b.

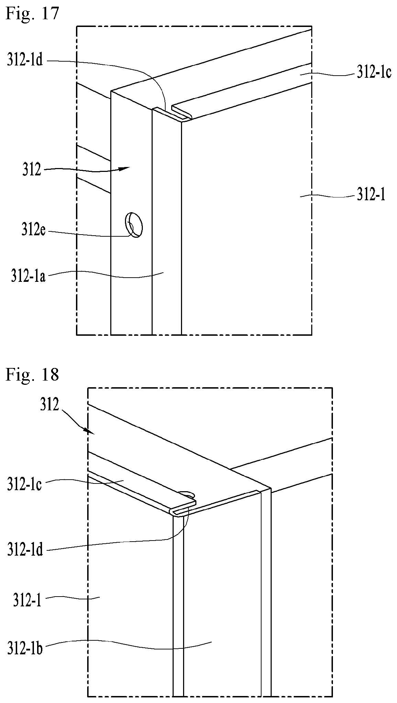

The first bent portion 312-1a may be provided at the first end of the casings 112-1 and 312-1, and the third bent portion 312-1c may be provided at the third end. For example, FIG. 17 illustrates an example in which the first bent portion 312-1a is provided at one side or front end of the casings 112-1 and 312-1, and the third bent portion 312-1c is provided at the upper end. The second bent portion 312-1b may be provided at the second end of the casings 112-1 and 312-1, and the third bent portion 312-1c may be provided at the third end. For example, FIG. 18 illustrates an example in which the second bent portion 312-1b is provided on the other side or rear end of the casings 112-1 and 312-1 and the third bent portion 312-1c is provided on the upper end.

However, it is not necessarily limited to this structure, and other examples may be possible when the bent portion is provided on at least one side of the casings 112-1 and 312-1. That is, an example may be possible in which the casings 112-1 and 312-1 may include one or two of the first to third bent portions 312-1a, 312-1b, and 312-1c and be supported by the second plates 112 and 312.

Referring to FIG. 17, in the present disclosure, the first bent portion 312-1a may be bent in a direction intersecting with the direction in which the casings 112-1 and 312-1 extends, on one side of the casings 112-1 and 312-1. The first bent portion 312-1a is formed to extend in the thickness direction of the heat insulators 110 and 310. As described above, the first bent portion 312-1a may be arranged near the insulating structure.

Referring to FIG. 18, in the present disclosure, the second bent portion 312-1b is bent on the other side of the casings 112-1 and 312-1. The second bent portion 312-1b is formed to extend in the thickness direction of the heat insulators 110 and 310. The second bent portion 312-1b may be bent in a direction parallel to the first bent portion 312-1a.

The second bent portion 312-1b may be positioned to cover the component, thereby preventing the component from being externally exposed. The component may be, for example, a coupling member that enables the panel to be coupled to the second plates 112 and 312.

The panel coupled to the second plates 112 and 312 may be the second plates 112 and 312 of the second heat insulators 110 and 310.

The second bent portion 312-1b may be extended longer than the first bent portion 312-1a. Therefore, the heat diffusion may be more advantageous on the other side where the second bent portion 312-1b is provided than on the one side where the first bent portion 312-1a is provided.

The heat insulators described above are not limited to the configurations and methods of the embodiments described above, and the embodiments may be configured by selectively combining all or part of each embodiment so that various modifications can be made.

It will be apparent to those skilled in the art that the present disclosure may be embodied in other specific forms without departing from the spirit and essential characteristics thereof. Therefore, the detailed description should not be construed in any way as limiting but rather as illustrative. The scope of the present disclosure should be determined by a reasonable interpretation of the appended claims, and all modifications within the scope of equivalents of the present disclosure are intended to be included within the scope of the present disclosure.

## Claims

1. A heat insulator comprising:
a first plate;
a second plate;
a vacuum space portion provided between the first plate and the second plate; and
a casing provided to cover one surface of the second plate.

2. The heat insulator of claim 1, wherein one surface of the second plate has a convex portion that is deformed by vacuum pressure forming the vacuum space portion and is formed to convex toward the casing, and
one surface of the casing includes
a connecting portion in contact with the convex portion, and
a spaced-apart portion provided on one surface of the second plate and spaced apart from a peripheral portion of the convex portion.

3. The heat insulator of claim 2, wherein the spaced-apart portion, between one surface of the second plate and one surface of the casing, is filled with air.

4. The heat insulator of claim 1, wherein the casing includes a bent portion that extends to be bent on at least one side.

5. The heat insulator of claim 4, wherein the bent portion includes at least one of
a first bent portion that is bent and extends from one side of the casing,
a second bent portion that is bent and extends from the other side of the casing opposite the one side, and
a third bent portion that is provided between the first bent portion and the second bent portion and is bent and extends from the casing.

6. The heat insulator of claim 5, wherein the second bent portion has a portion extending longer than the first bent portion.

7. The heat insulator of claim 1, wherein the casing has an extension portion extending parallel to an extension direction of the second plate from one side of the second plate.

8. The heat insulator of claim 1, wherein a surface component is provided on one side of the heat insulator, and the casing includes a portion in contact with the surface component.

9. The heat insulator of claim 8, wherein the casing has at least one bent portion that extends to be bent on at least one side and is supported by the second plate , and the bent portion is in contact with the surface component.

10. The heat insulator of claim 1, wherein the casing is formed of a material having a higher ionization tendency than that of the second plate.

11. The heat insulator of claim 1, wherein the second plate includes a first part formed as a surface defining the vacuum space portion, and a second part extending in a direction intersecting at least one side of the first part, and
a corner between the first part and the second part is formed as a curved surface having a predetermined R value.

12. The heat insulator of claim 11, wherein the second part includes a notching portion formed so that a portion thereof is cut out.

13. The heat insulator of claim 11, wherein the second part includes a through hole in which a coupling member is installed to enable fixation of an adjacent panel.

14. The heat insulator of claim 13, wherein the casing includes a bent portion extending to be bent on at least one side, and the bent portion covers the coupling member.

15. The heat insulator of claim 1, wherein the casing includes a portion that is at least partially bent to be connected to one side of the second plate.
